# EUROPEAN PATENT SPECIFICATION

(11) **EP 3 289 264 B1**
(45) Date of publication and mention of the grant of the patent: **05.06.2019**
(21) Application number: 16730917.8
(22) Date of filing: 31.03.2016
(51) Int. Cl.: F16L 1/20

(54) **OFFSHORE VESSEL, MARINE PIPELINE INSTALLATION SYSTEM AND METHOD**
OFFSHORE-SCHIFF, UNTERWASSERPIPELINEINSTALLATIONSSYSTEM UND -VERFAHREN
PROCÉDÉS ET SYSTÈME D'INSTALLATION D'UNE CONDUITE MARINE, NAVIRE DE HAUTE MER

(30) Priority: 28.04.2015 WO PCT/NL2015/050285
(43) Date of publication of application: 07.03.2018
(73) Proprietor: Itrec B.V., 3115 HH Schiedam (NL)
(72) Inventor: ROODENBURG, Joop, 3115 HH Schiedam (NL); NOUWENS, Ronny Lambertus Waltherus, 3115 HH Schiedam (NL); STAVENUITER, Wilco, 3115 HH Schiedam (NL)
(74) Representative: EP&C
(86) International application number: PCT/NL2016/050223
(87) International publication number: WO 2016/175652

(56) References cited:
- WO-A1-2007/108673
- WO-A1-2014/120004
- GB-A- 2 303 897

## Description

A first aspect of the present invention relates to a vessel adapted to perform subsea wellbore related operations and a method for performing such subsea wellbore related operations, in particular including module handling and laying flexible pipeline , e.g. wellbore intervention.

Such "wellbore intervention vessels" are well known and commercially available for years, e.g. from the applicant. In general, these are light-weight vessels provided with a moonpool and having a stationary drilling mast having a closed contour adjacent said moonpool. Such a closed contour drilling mast is of a relatively light-weight construction. A vessel according to the state of the art is shown e.g. in document GB2303897.

In order to handle modules, one or more vertical trolley rails are provided at a front side of the drilling mast, extending into the moonpool and along a mast side moonpool wall part. A module handling trolley is provided which is - during module handling - movable along the vertical trolley rails in a vertical trolley path into the moonpool, and a hoisting device is adapted - during module handling - to lower and raise the module and/ or the module handling trolley.

In common embodiments, a module handling device is provided which is adapted to - during module handling - transfer modules to the module handling trolley. The module handling device comprises skid rails on the main deck extending towards the moonpool wall. During module handling an unobstructed module handling area is provided above the skid rails and the moonpool.

In known embodiments wherein the drilling mast is a "multi-purpose tower" as known from the applicant, the drilling mast is adjustable for pipelay operations, by installing accessories such as tensioners to the multi-purpose tower.

In known embodiments, one or more tensioners are installed onto the drilling mast, each tensioner comprising a tensioner frame supported by the by the drilling mast and multiple tracks supported by said tensioner frame, said tracks being adapted to - in a pipeline laying configuration during laying flexible pipeline - engage the flexible pipeline and to support at least part of the weight of a launched pipeline in a firing line which extends on the outside of and adjacent to the front side of the drilling mast and through the moonpool.

Hence, although the known vessels provided with a multi-purpose tower are able to perform both module handling operations and laying flexible pipeline, this requires the installation and de-installation of tensioners. In view of the dimensions and weight of such tensioners, this is a time-consuming process.

It is an aim of the first aspect of the invention to provide an improved vessel and method to perform subsea wellbore related operations including module handling and laying flexible pipeline.

According to the first aspect of the present invention, at least the tensioner frame of a lower tensioner is mounted pivotably about a vertical pivot axis to the drilling mast, such that the tensioner frames are pivotable between the pipeline laying configuration wherein the lower tensioner is provided in the module handling area and an open configuration wherein the module handling area and at least part of the vertical trolley path is unobstructed to allow module handling.

This configuration allows a fast and easy switch between a module-handling configuration and a flexible pipeline laying configuration, resulting in a more versatile vessel and a more efficient method for performing subsea wellbore related operations including module handling and laying flexible pipeline.

The first aspect of the present invention thus relates to a vessel comprising
- a hull with a main deck;
- a moonpool having a moonpool wall extending through the hull,
- a stationary drilling mast having a closed contour mounted on the hull adjacent said moonpool, wherein the mast has a front side facing the moonpool.

In embodiments, such a hull is a mono-type hull, commonly provided with a bow and a stern and a main deck therebetween. Alternatively, it is also conceivable that the vessel is a semi-submersible.

In embodiments wherein the vessel is a mono-type hull, the moonpool is advantageously provided between the port and starboard side of the vessel, preferably centrally therebetween.

The stationary drilling mast is mounted adjacent said moonpool. Advantageously, the drilling mast is provided at a port side or a starboard side of the vessel. It is also conceivable that the drilling mast is provided at the front or rear side of the vessel, such that the moonpool and drilling mast are aligned parallel to the longitudinal axis of the vessel.

To perform module handling, a module handling trolley movable along trolley handling rails is provided. A hoisting device is adapted to lower and raise the module. Preferably, the hoisting device comprises a winch provided inside the drilling mast, and a cable extending from the winch via a top end of the drilling mast to the module handling trolley. Advantageously, the hoisting device is provided with a compensator to compensate for heave. Such a hoisting device is e.g. an A&R system, i.e. an abandonment and recovery' system comprising a winch, cable and one or more pulleys.

In embodiments, the hoisting device adapted to lower and raise the module is embodied as a crane, mounted on top of the drilling mast. In alternative embodiments, it is conceivable that the hoisting device adapted to lower and raise the module is a deck mounted crane, e.g. comprising a deep water lowering cable.

As is known in the art, according to the first aspect of the invention a module handling device is provided which is adapted to - during module handling - transfer modules to the module handling trolley. The module handling device comprises skid rails on the main deck extending towards the moonpool wall, wherein - during module handling - an unobstructed module handling area is provided above the skid rails and the moonpool. Possibly, hatches comprising aligned rails are provided over the moonpool during module handling.

In a preferred configuration wherein the drilling mast is provided at a port side or a starboard side of the vessel, the skid rails of the module handling device extend towards the moonpool wall transverse to the mast side moonpool wall part.

Advantageously, the stationary drilling mast comprises front, rear and two side plates interconnected by corner connections to form the closed contour. Such a configuration, e.g. obtained by welding, renders a relatively light-weight mast construction. Preferably, two vertical trolley rails are mounted to the two corner connections of the front plate with the side plates.

To perform flexible pipelaying, one or more tensioners are provided, preferably one or two above one another. Each tensioner comprises a tensioner frame supported by the by the drilling mast and multiple tracks supported by said tensioner frame, said tracks being adapted to - in a pipeline laying configuration during laying flexible pipeline - engage the flexible pipeline and to support at least part of the weight of a launched pipeline in a firing line which extends on the outside of and adjacent to the front side of the drilling mast and through the moonpool. Commonly, a tensioner is provided with 3-5 tensioner tracks, most commonly 4 tracks.

According to a first aspect of the present invention, at least the tensioner frame of a lower tensioner is mounted pivotably about a vertical pivot axis to the drilling mast, such that the tensioner frames are pivotable between the pipeline laying configuration wherein the lower tensioner is provided in the module handling area and an open configuration wherein the module handling area and at least part of the vertical trolley path is unobstructed to allow module handling.

In embodiments, only one tensioner is provided, of which the tensioner frame is mounted pivotably according to the first aspect of the present invention.

In alternative embodiments, two tensioners are provided above one another. It is conceivable that the dimensions of the module to be handled is such that only the lower tensioner is provided in the module handling area, and hence only the tensioner frame of the lower tensioner is mounted pivotably, while the tensioner frame of the upper tensioner is not pivotably mounted. As a result, not the entire vertical trolley path is unobstructed.

It is also conceivable that two tensioners are provided above one another, and that the tensioner frames of both tensioners are mounted pivotably about a vertical pivot axis to the drilling mast, such that in the open configuration thereof the entire vertical trolley path is unobstructed, in addition to the module handling area.

It is also conceivable that a tensioner is provided as a module, which can thus optionally be provided in the firing line.

Advantageously, the vessel further comprises one or more storage reels for storage of flexible pipeline to be laid. Such storage reels are optionally provided on another vessel adjacent to, or coupled to, the vessel of the first aspect of the present invention.

In embodiments, at least one horizontal hoist beam is mounted pivotably about a vertical pivot axis to the drilling mast, below the one or more tensioners, such that the hoist beam is displaceable between an operative configuration wherein the horizontal hoist beam extends perpendicular to the drilling mast, in the module handling area, and a non-operable configuration wherein the module handling area is unobstructed to allow module handling. Such horizontal hoist beams, commonly two, are generally provided to assist in equipment or accessory handling in the moonpool area, e.g. anodes or strakes.

Advantageously, the or both hoist beam(s) is/ are mounted to a side of the drilling mast, perpendicular to the front side. As such, a pivoting movement away from the operative configuration removes the hoist beam away from the module handling area, and allows the hoist beam to be pivoted over 90-180°.

In embodiments, at least one centralizer is mounted pivotably about a horizontal pivot axis to the front side of the drilling mast, such that the centralizer is displaceable between an operative configuration wherein the centralizer extends perpendicular to the drilling mast, in the vertical trolley path, and a non-operable configuration wherein the centralizer has pivoted towards the drilling mast and the vertical trolley path is unobstructed to allow module handling. Such a centralizer, commonly provided above and one below each tensioner, assists in centralizing the pipeline during pipeline laying.

Advantageously, two vertical trolley rails are provided, and the at least one centralizer is provided between these vertical trolley rails.

In embodiments, an auxiliary crane is mounted at an elevated position to the drilling mast, preferably to a top end of the drilling mast. Possibly such an auxiliary crane is suitable for handling large accessories, such as end connectors, and provide such large accessories to the module handling trolley.

In embodiments, further a pipeline guide is provided, providing an arcuate guide surface in a vertical plane adapted to - during laying flexible pipeline - be mounted via a guide support structure above the one or more tensioners to guide said pipeline over the pipeline guide into the one or more tensioners and into the firing line.

In such an embodiment with a pipeline guide coiled tubing handling is possible, wherein use is made of a pipeline guide, preferably a chute, and a tensioner. During coiled tubing handling, it is conceivable that a four-track tensioner is operable in a two-track mode.

In embodiments, a coiled tubing injector is installed as a module into the firing line, above the one or more tensioners.

Commonly known pipeline guides include a chute, i.e. a semi-circular guide, and relatively larger aligner wheels.

In embodiments, the pipeline guide is mounted pivotable about a horizontal pivot axis to the drilling mast. This allows the pipeline guide to be pivoted away to clear part of the vertical trolley path.

In embodiments, the pipeline guide is mounted at an elevated position to the drilling mast.

In a preferred configuration wherein the drilling mast is provided at a port side or a starboard side of the vessel, the drilling mast is provided aside of the vertical plane of the arcuate guide surface. Possibly, in such embodiments, the guide support structure is embodied as a single-sided guide support arm arranged on one side of the pipeline guide only, one end of which is mounted to a side of the drilling mast, perpendicular to the front side the drilling mast, and onto the other end of which guide support arm a cantilevered carrier is provided to support the pipeline guide.

In an alternative configuration, in particular when a relatively small pipeline guide such as a chute is envisaged, it is conceivable that the pipeline guide is mounted to a tensioner frame. As such, the pipeline guide is pivotable together with the tensioner frame.

In a possible embodiment, the tensioner frame comprises a control installation which is pivotable together with the tensioner. This facilitates the pivot of the tensioner, as it does not require the disconnection/ connection of hydraulics/ electronics upon pivoting to the open and pipeline laying configuration respectively. In embodiments wherein the lower tensioner comprises two frame halves that are pivotable, advantageously each frame halve comprise its own hydraulic/ electronic control installation.
In embodiments, the tensioner frame is mounted to a side of the drilling mast, perpendicular to the front side. This is in particular advantageous in configurations wherein the stationary drilling mast comprises front, rear and two side plates interconnected by corner connections to form the closed contour. Advantageously, two vertical trolley rails are mounted to the two corner connections of the front plate with the side plates.

Advantageously, the tensioner frame in the open configuration has pivoted essentially over 180° to adjoin a side of the mast, perpendicular to the front side. In embodiments wherein the lower tensioner comprises two frame halves that are pivotable, advantageously each frame halve is pivotable to adjoin a side of the mast. This is advantageous in view of the moment excerted by the tensioner frame to the mast. In addition, it is advantageous in view of the available space. In addition, it allows the provision of a maintenance platform at the side of the mast to which the tensioner or tensioner halve pivots, adjacent and below the tensioner frame in the open configuration.

As indicated before, in embodiments the lower tensioner comprises two frame halves with track units which are adapted to be conjoined to each other, each frame halve being pivotably mounted to the drilling mast about a respective vertical pivot axis, such that the frame halves are movable between the pipeline laying configuration in which the frame halves are conjoined in the module handling area to form an enclosed pipeline annulus able to support the pipeline, and the open configuration wherein the segments are disconnected and separated and have pivoted to clear the module handling area and at least part of the vertical trolley path. The one or more, preferably two, vertical trolley rails are advantageously provided between the vertical pivot axes of the frame halves of the tensioner.

Advantageously, the two frame halves each comprise two tensioner tracks.

A first aspect of the present invention also relates to a method for performing subsea wellbore related operations including module handling and laying flexible pipeline, e.g. wellbore intervention, wherein use is made of a vessel according to one or more of the claims 1-10.

An advantageous method comprises the following steps:
- laying flexible pipeline with the one or more tensioners in the pipeline laying configuration;
- pivoting the tensioner frames of a lower tensioner to the open configuration;
- moving the module handling trolley to a module receiving position;
- transferring a module via the module handling device to the module handling trolley at the module receiving position;
- lowering the module into the moonpool.

An alternative advantageous method comprises the steps of:
- mounting a pipeline guide via a guide support structure above the one or more tensioners to provide an arcuate guide surface in a vertical plane
- run coiled tubing over the pipeline guide and through the one or more tensioners and into the firing line.

As such, the tensioners and pipeline guide of a pipelaying system are applied for running coiled tubing. Possibly, the tensioner is a four-track tensioner. Advantageously, such a four-track tensioner is also operable in a two-track mode during coiled tubing handling.

A second aspect of the present invention relates to a marine reel lay method pipeline installation system and a method for laying an offshore pipeline wherein use is made of a marine reel lay method pipeline installation system.

Marine reel lay method pipeline installation systems are commonly known in the art and commercially available from the applicant. Generally, such systems comprise:
- a pipeline launch tower which is adapted to launch the pipeline in a firing line along said tower,
- a pipeline guide provided at an elevated position, which is adapted to guide said pipeline over the pipeline guide into the firing line,
- one or more tensioners, each tensioner comprising a tensioner frame supported by the by the tower and multiple tracks supported by said tensioner frame, said tracks being adapted to - in a flexible pipeline laying configuration - engage the flexible pipeline and to support at least part of the weight of a launched pipeline in the firing line;
- one or more vertical trolley rails supported by the pipeline launch tower;
- a trolley which is movable along the vertical trolley rails in a vertical trolley path;
- a hoisting device being adapted to lower and raise the trolley.

The trolley may e.g. be provided to perform J-lay operations, accessory handling, guide an A&R cable, end connector handling, etc. etc.

For example in WO2007/108673 a configuration comprising retractable tensioners is disclosed, wherein the trolley is embodied as a travelling clamp used to perform J-lay operations.

WO2009/1341 16 of the same applicant a system is described with an auxiliary trolley which is provided with sheaves of the A&R sheave arrangement.

In WO2014/120004 of the same applicant a system is disclosed wherein the trolley is in particular embodied to assist in lowering end connectors.

It is an aim of the second aspect of the invention to provide an improved marine reel lay method pipeline installation system and a method for laying an offshore pipeline wherein use is made of a marine reel lay method pipeline installation system.

According to the second aspect of the invention, the lower tensioner comprises two frame segments with track units which are adapted to be conjoined to each other, each one being pivotably mounted to the tower about a respective vertical pivot axis, and in that the one or more vertical trolley rails are positioned between these vertical pivot axes; the frame segments being movable between a closed flexible pipeline laying configuration in which the frame segments are conjoined to form an enclosed pipeline annulus able to support the pipeline, and an open configuration wherein the segments are disconnected and separated and have pivoted over at least 90° to clear the vertical trolley path.

This configuration allows a fast and easy switch between a pipeline laying configuration and a trolley-operation, resulting in a more versatile system and a more efficient method.

In embodiments, the marine pipeline installation system is provided on a vessel, preferably a mono-hull vessel. Advantageously, the vessel is provided with one or more storage reels for flexible pipelines. Alternatively, a separate vessel is provided for the storage of the storage reels.

In embodiments, the pipeline launch tower is embodied as an A-frame. Advantageously, two vertical trolley rails are provided at the 'legs' of the A-frame.

Alternatively, it is well conceivable that the pipeline launch tower is embodied as a mast having a closed outer contour, advantageously being made of plate-shaped elements.

Advantageously the pipeline launch tower has a square or rectangular cross section, defining a front side adjoining the vertical trolley path and perpendicular sides thereto.

In embodiments, two vertical trolley rails are provided, advantageously at the corners of the pipeline launch tower between the front side and the perpendicular sides.

A pipeline guide is provided, providing an arcuate guide surface in a vertical plane adapted to - during laying flexible pipeline - be mounted via a guide support structure above the one or more tensioners to guide said pipeline over the pipeline guide into the one or more tensioners and into the firing line.

In embodiments, the pipeline guide is mounted to the pipeline launch tower.

Commonly known pipeline guides include a chute, i.e. a semi-circular guide, and relatively larger aligner wheels.

In embodiments, the pipeline guide is mounted pivotable about a horizontal pivot axis to the drilling mast. This allows the pipeline guide to be pivoted away to clear part of the vertical trolley path.

In an alternative configuration, in particular when a relatively small pipeline guide such as a chute is envisaged, it is conceivable that the pipeline guide is mounted to a tensioner frame. As such, the pipeline guide is pivotable together with the tensioner frame.

According to the second aspect of the invention, the lower tensioner, and possibly also other tensioners, comprise two frame segments with track units. In an embodiment, the frame segments are frame halves, each comprising the same number of tracks, e.g. two tracks.

In embodiments, only one tensioner is provided, of which the tensioner frame is mounted pivotably according to the first aspect of the present invention.

In alternative embodiments, two tensioners are provided above one another. It is conceivable that the dimensions of the module to be handled is such that only the lower tensioner is provided in the module handling area, and hence only the tensioner frame of the lower tensioner is mounted pivotably, while the tensioner frame of the upper tensioner is not pivotably mounted. As a result, not the entire vertical trolley path is unobstructed.

It is also conceivable that two tensioners are provided above one another, and that the tensioner frames of both tensioners are mounted pivotably about a vertical pivot axis to the drilling mast, such that in the open configuration thereof the entire vertical trolley path is unobstructed, in addition to the module handling area.

In embodiments wherein the pipeline launch tower has a square or rectangular cross section, defining a front side adjoining the vertical trolley path and perpendicular sides thereto, advantageously the frame segments are mounted to the sides of the pipeline launch tower. The one or more vertical trolley rails are preferably provided at the front side of the pipeline launch tower. In possible embodiments, the frame segments in the open configuration have pivoted essentially over 180°, adjoining sides of the tower. This is advantageous in view of the moment excerted by the tensioner frame to the mast. In addition, it is advantageous in view of the available space. In addition, it allows the provision of a maintenance platform at the side of the mast to which the tensioner or tensioner halve pivots, adjacent and below the tensioner frame in the open configuration.

In possible embodiments, a frame segment comprises a hydraulic or electric control installation which is pivotable together with the frame halve. This facilitates the pivot of the tensioner, as it does not require the disconnection/ connection of hydraulics / electronics upon pivoting to the open and pipeline laying configuration respectively. In embodiments wherein the lower tensioner comprises two frame halves that are pivotable, advantageously each frame halve comprise its own hydraulic/ electric control installation.

The second aspect of the present invention also relates to a method for laying an offshore pipeline wherein use is made of a marine reel lay method pipeline installation system according to one or more of the claims 13-17.

An advantageous method comprises the following steps:
- laying a flexible pipeline with the one or more tensioners in the pipeline laying configuration;
- pivoting the tensioner frame segments to the open configuration;
- operating the hoisting device to lower and raise the trolley in the unobstructed vertical trolley path.

Both aspects of the invention will be further elucidated in the drawings, in which:
Fig. 1a shows a first embodiment of part of a vessel according to both aspects of the invention in cross-section, perpendicular to the longitudinal axis of the vessel, with the tensioner in the open configuration;
Fig. 1b shows the embodiment of fig. 1a in cross section, along the longitudinal axis of the vessel;
Fig. 2a shows a second embodiment of part of a vessel according to both aspects of the invention in cross-section, perpendicular to the longitudinal axis of the vessel, with the tensioners in the pipeline laying configuration;
Fig. 2b shows the embodiment of fig. 2a in cross section, along the longitudinal axis of the vessel;
Fig. 3 shows the first embodiment of part of the vessel in top view;
Fig. 4 shows a cross-section of an embodiment of a tensioner according to both aspects of the invention in pipeline laying configuration;
Fig. 5a shows a cross-section of the tensioner of fig. 4 in an open configuration;
Fig. 5b shows a cross-section of the tensioner of fig. 4 in an intermediate configuration;
Fig. 6 shows a cross-section of the tensioner of fig. 4 in an open configuration with a module handling trolley in the vertical trolley path.

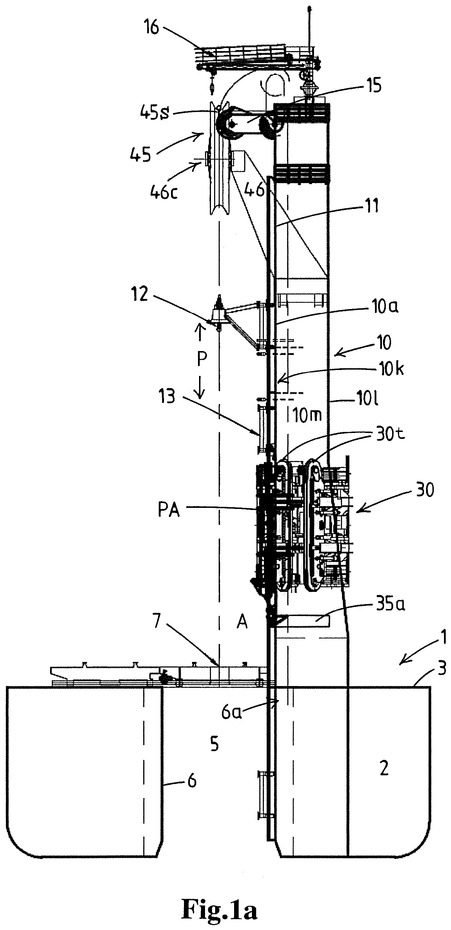

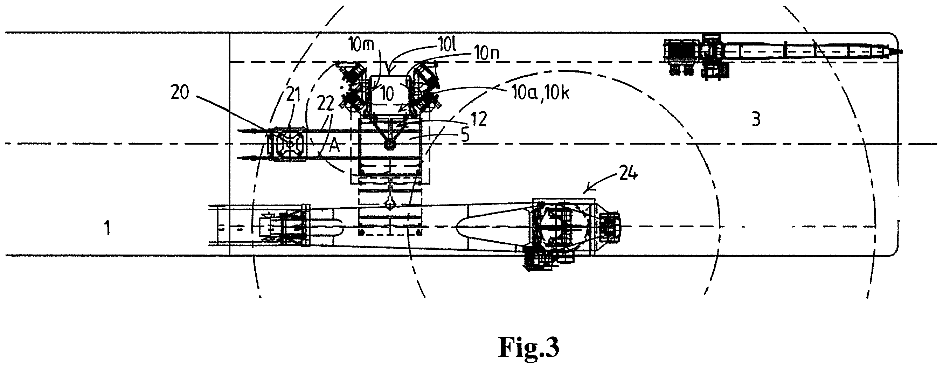

In figs. 1a, 1b, 2a, 2b and 3 a vessel 1 is shown, which is adapted to perform subsea wellbore related operations including module handling and laying flexible pipeline, e.g. wellbore intervention. The shown vessel 1 comprises a hull 2 with a main deck 3, and a moonpool 5 having a moonpool wall 6 extending through the hull 2. Here, the moonpool is optionally covered by a skiddable hatch 7, which in the top view of fig. 3 is shown over the moonpool in continuous lines, and aside of the moonpool in intermittent lines.

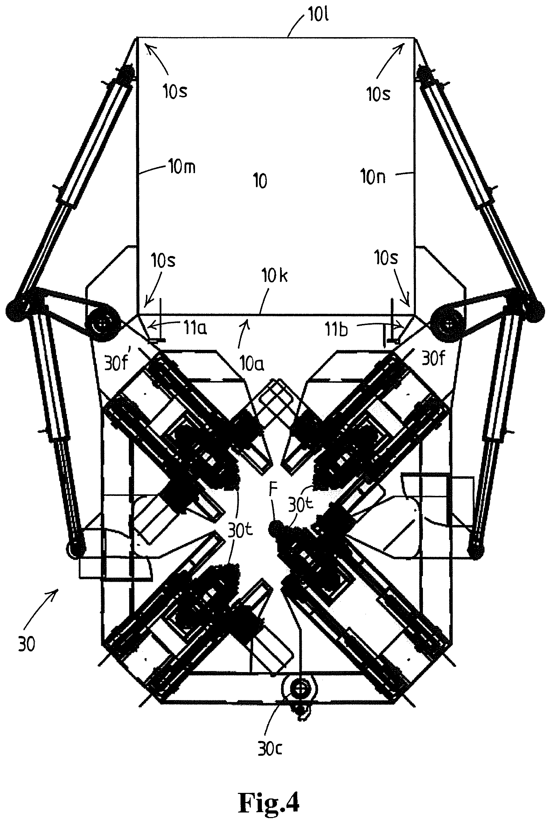

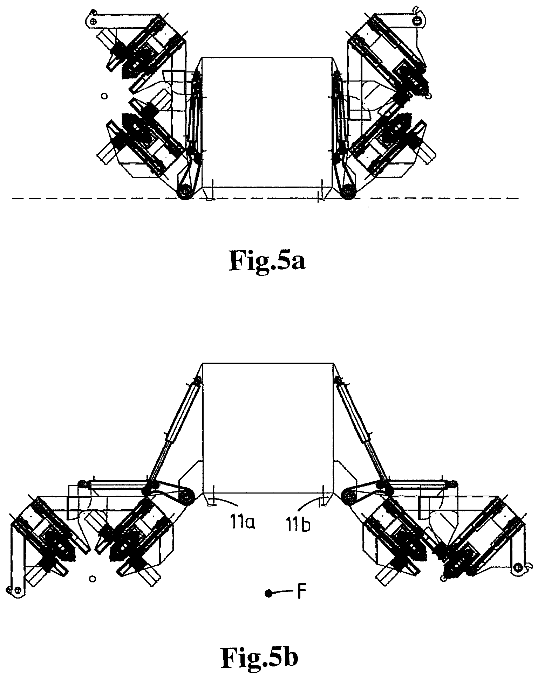

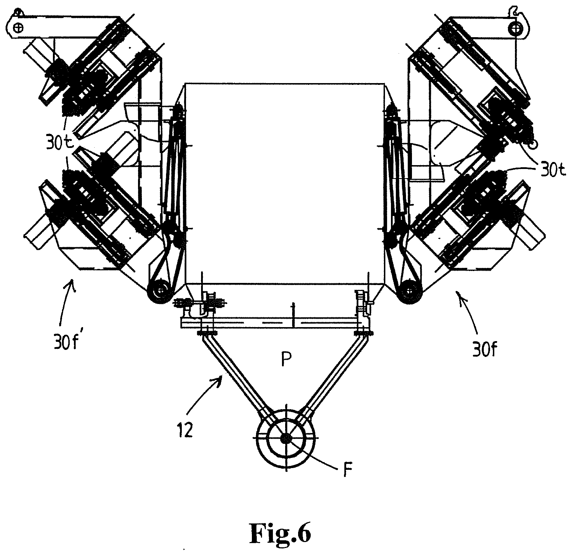

In figs. 4, 5a, 5b and 6 a tensioner 30 and drilling mast/ pipeline launch tower 10 according to both aspects of the invention are shown in detail and in cross-section. In fig. 4 the tensioner is shown in a pipeline laying configuration; in fig. 5a in an open configuration; in fig. 5b in an intermediate configuration; and in fig. 6 in an open configuration with a module handling trolley in the vertical trolley path. Same parts are given same reference numerals.

The shown vessel 1 is provided with a stationary drilling mast 10 having a closed contour mounted on the hull 2 adjacent said moonpool 5, wherein the mast 10 has a front side 10a facing the moonpool 5. The moonpool wall 6 comprises a mast side moonpool wall part 6a at the side of the mast 10.

According to the present invention, the vessel 1 comprises one or more vertical trolley rails 11 provided at the front side 10a of the drilling mast 10, extending into the moonpool 5 and along a mast side moonpool wall part 6a. A module handling trolley 12, and in the shown embodiments also a cursor trolley 13 are provided, which are - during module handling - movable along the vertical trolley rails 11, here two rails 11a, 11b, in a vertical trolley path P into the moonpool 5.

A hoisting device 15 is provided which is adapted - during module handling - to lower and raise the module handling trolley 12, and/ or a module. Optionally, in the shown embodiment, an auxiliary crane, here a service crane 16 is mounted at an elevated position to the drilling mast, preferably to a top end of the drilling mast. It is also conceivable that this service crane is adapted to lower and raise the module handling trolley 12 and/ or a module in addition to or instead of the hoisting device 15. The hoisting device 15 is advantageously mounted movable, such that it can be cleared from the firing line.

Furthermore, a module handling device 20 is provided, visible in fig. 3, adapted to - during module handling - transfer a module 21 to the module handling trolley 12, comprising skid rails 22 on the main deck 3 extending towards the moonpool wall 6, wherein - during module handling - an unobstructed module handling area A is provided above the skid rails 22 and the moonpool. In the shown embodiment, the skid rails 22 are aligned with skid rails provided on the skiddable hatch 7 to bring the module in the vertical trolley path P.

It is also conceivable that a crane, e.g. deck mounted crane such as crane 24 shown in fig. 3 is used to bring the module from the skid rails into the vertical trolley path, and to lower an raise the module handling trolley 12 and/ or a module. For example, the crane has a capacity to transfer end connectors into the vertical trolley path. In embodiments, the crane is provided with a deep water lowering cable. Hence, it is well conceivable that the hoisting capacity of the crane exceeds the capacity of the tensioners.

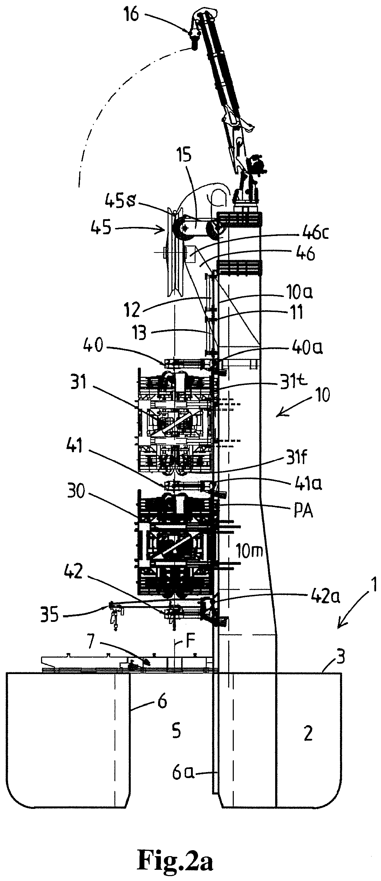

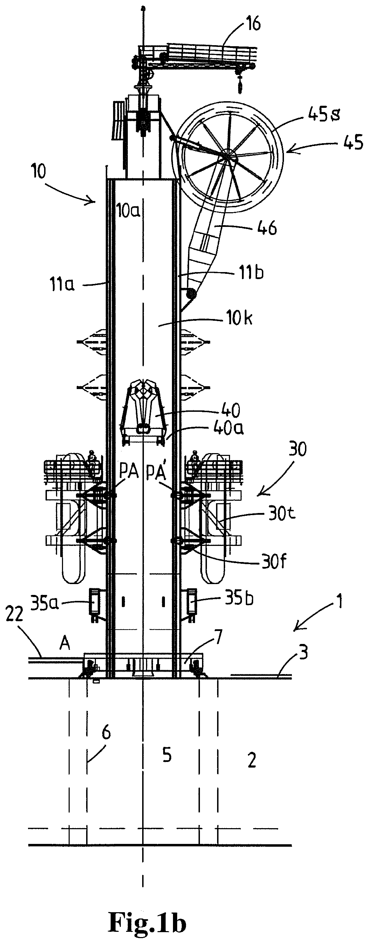

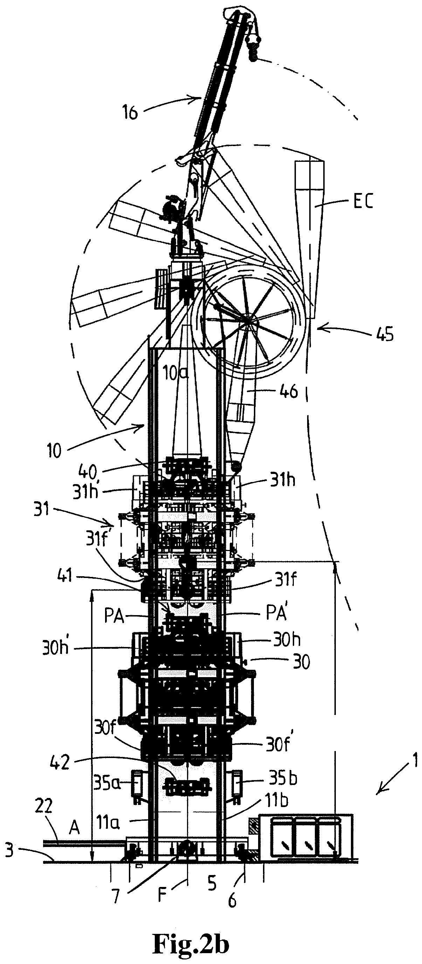

According to the present invention, the vessel comprises one or more tensioners. In the embodiment of figs. 1a and 1b, one tensioner 30 is provided. In the embodiment of figs. 2a and 2b, an additional tensioner 31 is provided above tensioner 30. For example, the tensioner 30 has a capacity of 200mt. The overall pipelaying capacity can thus be increased by providing an additional tensioner 31, e.g. also a 200 mt capacity tensioner.

Each tensioner 30, 31 comprises a tensioner frame 30f; 31f supported by the by the drilling mast and multiple tracks 30t; 31t supported by said tensioner frame. This is shown in further detail in figs. 4-6. Said tensioner tracks are adapted to - in a pipeline laying configuration during laying flexible pipeline - as shown in figs. 2a and 2b and in fig. 4 - engage the flexible pipeline (not shown) and to support at least part of the weight of a launched pipeline in a firing line F which extends on the outside of and adjacent to the front side of the drilling mast 10a and through the moonpool 5.

According to the invention, at least the tensioner frame of the lower tensioner 30 is mounted pivotably about a vertical pivot axis PA to the drilling mast. Here, the tensioner frame comprises two frame parts or frame halves 30f and 30f' that are each mounted pivotably about a respective vertical pivot axis PA and PA' to the drilling mast, such that the tensioner frame parts/ halves are pivotable between the pipeline laying configuration in which the frame halves are conjoined in the module handling area to form an enclosed pipeline annulus able to support the pipeline (figs. 2a, 2b and fig. 4) and an open configuration (figs. 1a, 1b and figs. 5a and 6) wherein the segments are disconnected and separated and have pivoted to clear the module handling area and at least part of the vertical trolley path, such that the module handling area and at least part of the vertical trolley path P is unobstructed to allow module handling. The frame halves 30f, 30f' each comprise two tracks 30t, which are adapted to be conjoined to each other, here at the connection 30 c visible in fig. 4.

In fig. 2b, it is visible that in the shown embodiment each tensioner frame, in particular each tensioner frame part, comprises an electric control installation 30h; 30h'; 31h; 31h' which is pivotable together with the tensioner frame parts.

In the embodiments of figs. 1a, 1b, 2a and 2b, a pair of optional horizontal hoist beams 35a, 35b is visible, which are shown in cross-section in figs. 1b and 2b. The hoist beams 35a, 35b are advantageously mounted pivotably about a vertical pivot axis PA, PA' to the drilling mast, here coinciding with the pivot axes of the tensioner frame parts, below the one or more tensioners 30; 31. As such the hoist beams 35a, 35b are displaceable between an operative configuration, shown in fig. 2a wherein the horizontal hoist beam extends perpendicular to the drilling mast, in the module handling area, and a non-operable configuration, shown in fig. 1a, wherein the module handling area is unobstructed to allow module handling. Here, the hoist beam 35a has pivoted to a position adjacent a side of the drilling mast 10.

In the embodiments of figs. 1a, 1b, 2a and 2b, also optional centralizers 40, 41, 42 are visible, provided above and below the one or more tensioners 30, 31. Each centralizer is mounted pivotably about a horizontal pivot axis 40a, 41a, 42a to the front side 10a of the drilling mast 10, such that the centralizer is displaceable between an operative configuration wherein the centralizer extends perpendicular to the drilling mast, in the vertical trolley path, as shown in figs. 2a and 2b, and a non-operable configuration wherein the centralizer has pivoted towards the drilling mast and the vertical trolley path is unobstructed to allow module handling, as visible in fig. 1b.

Such a centralizer is possibly embodied as a rollerbox. It may be operable to centralize a pipe. It is also conceivable that it is embodied as a cable guide, e.g. for a deep water lowering cable.

The stationary drilling mast 10 as shown in the drawings comprises a front plate 10k at the front side 10 thereof, and a rear plate 10l and two side plates 10m; 10n which are interconnected by corner connections 10s to form the closed contour. This is shown in an enlarged view in fig. 4. Two vertical trolley rails 11a; 11b are mounted to the two corner connections 10a of the front plate 10k with the side plates 10m; 10n.

In the shown configuration, again best visible in fig. 4, the two tensioner frame parts 30f, 30f' of the tensioner frame 30f are mounted pivotably to a side 10m; 10n of the drilling mast/ tower, perpendicular to the front side 10k. In the open configuration, the tensioner frame has pivoted essentially over 180° to adjoin a side of the mast, perpendicular to the front side.

According to the second aspect of the invention, in the shown configuration, the two tensioner frame parts 30f, 30f' of the tensioner frame 30f are mounted pivotably to the drilling mast/ tower, about a respective pivot axis PA, PA'. The vertical trolley rails 11a, 11b are positioned between these vertical pivot axes PA, PA'. The frame segments 30f, 30f' are movable between a closed flexible pipeline laying configuration in which the frame segments are conjoined to form an enclosed pipeline annulus able to support the pipeline (figs. 2a, 2b, 4), and an open configuration (figs. 1a, 1b, 5a, 6) wherein the segments are disconnected and separated and have pivoted over at least 90° (fig. 5b) to clear the vertical trolley path.

In the embodiments of figs. 1a, 1b, 2a and 2b, also an optional pipeline guide 45 is provided, here embodied as an aligner wheel. The pipeline guide 45 provides an arcuate guide surface 45s in a vertical plane, and is adapted to - during laying flexible pipeline - be mounted via a guide support structure 46 above the one or more tensioners 30; 31 to guide said pipeline over the pipeline guide into the one or more tensioners and into the firing line F. As visible in fig. 2b, the pipeline guide 45, together with auxiliary crane 16, may allow the passage of an end connector EC of a pipeline (not shown) into the firing line. In an alternative embodiment, the pipeline guide 45 is mounted movable and adapted to be cleared from the firing line. An end connector is e.g. positionable in the firing line by a deck mounted crane.

As visible in fig. 3, the drilling mast 10 is provided at a port side or a starboard side of the vessel. From figs. 1a, 1b, 2a and 2b follows that the drilling mast 10 is provided aside of the vertical plane of the arcuate guide surface 45s. In the shown embodiment, the guide support structure 46 is embodied as a single-sided guide support arm arranged on one side of the pipeline guide 45 only, one end of which is mounted to a side 10m of the drilling mast, perpendicular to the front side 10k of the drilling mast, and onto the other end of which guide support arm a cantilevered carrier 46c is provided to support the pipeline guide 45.

## Claims

1. Vessel (1) adapted to perform subsea wellbore related operations including module handling and laying flexible pipeline, e.g. wellbore intervention, said vessel comprising:
- a hull (2) with a main deck (3);
- a moonpool (5) having a moonpool wall (6) extending through the hull;
- a stationary drilling mast (10) having a closed contour mounted on the hull adjacent said moonpool, wherein the mast has a front side (10a) facing the moonpool;
- one or more vertical trolley rails (11) provided at the front side of the drilling mast, extending into the moonpool and along a mast side moonpool wall part (6a);
- a module handling trolley (12) which is - during module handling - movable along the vertical trolley rails in a vertical trolley path (P) into the moonpool;
- a hoisting device (15) being adapted - during module handling - to lower and raise the module;
- a module handling device (20) adapted to - during module handling - transfer modules to the module handling trolley, comprising skid rails (22) on the main deck extending towards the moonpool wall, wherein - during module handling - an unobstructed module handling area (A) is provided above the skid rails and the moonpool;
- one or more tensioners (30; 31), each tensioner comprising a tensioner frame (30f, 30f'; 31f) supported by the by the drilling mast and multiple tracks (30t; 31t) supported by said tensioner frame, said tracks being adapted to - in a pipeline laying configuration during laying flexible pipeline - engage the flexible pipeline and to support at least part of the weight of a launched pipeline in a firing line which extends on the outside of and adjacent to the front side of the drilling mast and through the moonpool;
wherein at least the tensioner frame of a lower tensioner is mounted pivotably about a vertical pivot axis (PA; PA') to the drilling mast, such that the tensioner frame is pivotable between the pipeline laying configuration wherein the lower tensioner is provided in the module handling area and an open configuration wherein the module handling area and at least part of the vertical trolley path is unobstructed to allow module handling.

2. Vessel according to claim 1, wherein at least one horizontal hoist beam (35a, 35b) is mounted pivotably about a vertical pivot axis (PA, PA') to the drilling mast (10), below the one or more tensioners (30, 31), such that the hoist beam is displaceable between an operative configuration wherein the horizontal hoist beam extends perpendicular to the drilling mast, in the module handling area, and a non-operable configuration wherein the module handling area is unobstructed to allow module handling.

3. Vessel according to claim 1 or 2, wherein at least one centralizer (40; 41; 42) is mounted pivotably about a horizontal pivot axis (40a; 41a; 42a) to the front side (10a) of the drilling mast, such that the centralizer is displaceable between an operative configuration wherein the centralizer extends perpendicular to the drilling mast, in the vertical trolley path, and a non-operable configuration wherein the centralizer has pivoted towards the drilling mast and the vertical trolley path is unobstructed to allow module handling.

4. Vessel according to one or more of the preceding claims, wherein the stationary drilling mast comprises front, rear and two side plates (10k; 101; 10m; 10n) interconnected by corner connections (10s) to form the closed contour, and wherein two vertical trolley rails (11a; 11b) are mounted to the two corner connections of the front plate with the side plates.

5. Vessel according to one or more of the preceding claims, wherein an auxiliary crane (16) is mounted at an elevated position to the drilling mast, preferably to a top end of the drilling mast.

6. Vessel according to one or more of the preceding claims, further comprising a pipeline guide (45) providing an arcuate guide surface (45s) in a vertical plane adapted to - during laying flexible pipeline - be mounted via a guide support structure (46) above the one or more tensioners to guide said pipeline over the pipeline guide into the one or more tensioners and into the firing line (F), wherein preferably the drilling mast (10) is provided at a port side or a starboard side of the vessel and wherein the drilling mast is provided aside of the vertical plane of the arcuate guide surface (45s), and wherein the guide support structure (46) is embodied as a single-sided guide support arm arranged on one side of the pipeline guide only, one end of which is mounted to a side (10m) of the drilling mast, perpendicular to the front side (10k) of the drilling mast, and onto the other end of which guide support arm a cantilevered carrier (46c) is provided to support the pipeline guide (45).

7. Vessel according to one or more of the preceding claims, wherein the tensioner frame comprises a control installation (30h; 30h'; 31h; 31h') which is pivotable together with the tensioner frame.

8. Vessel according to one or more of the preceding claims, wherein the tensioner frame (30f, 30f'; 31f) is mounted to a side (10m; 10n) of the drilling mast, perpendicular to the front side (10k), and wherein the tensioner frame in the open configuration has pivoted essentially over 180° to adjoin a side of the mast, perpendicular to the front side.

9. Vessel according to one or more of the preceding claims, wherein the lower tensioner (30) comprises two frame halves (30f, 30f') with tracks which are adapted to be conjoined to each other, each frame halve being pivotably mounted to the drilling mast about a respective vertical pivot axis, such that the frame halves are movable between the pipeline laying configuration in which the frame halves are conjoined in the module handling area to form an enclosed pipeline annulus able to support the pipeline, and the open configuration wherein the segments are disconnected and separated and have pivoted to clear the module handling area and at least part of the vertical trolley path.

10. Method for performing subsea wellbore related operations including module handling and laying flexible pipeline , e.g. wellbore intervention, wherein use is made of a vessel according to one or more of the preceding claims, preferably comprising the steps of:
- laying flexible pipeline with the one or more tensioners in the pipeline laying configuration;
- pivoting the tensioner frame of a lower tensioner to the open configuration;
- moving the module handling trolley to a module receiving position;
- transferring a module via the module handling device to the module handling trolley at the module receiving position;
- lowering the module into the moonpool.

11. Method according to claim 10, comprising the steps of:
- mounting a pipeline guide (45) via a guide support structure (46) above the one or more tensioners to provide an arcuate guide surface (45s) in a vertical plane
- run coiled tubing over the pipeline guide and through the one or more tensioners and into the firing line (F).

12. Marine reel lay method pipeline installation system for laying a flexible pipeline on the seabed a pipeline, wherein the system comprises:
- a pipeline launch tower (10) which is adapted to launch the pipeline in a firing line (F) along said tower,
- a pipeline guide (45) provided at an elevated position, which is adapted to guide said pipeline over the pipeline guide into the firing line,
- one or more tensioners (30; 31), each tensioner comprising a tensioner frame (30f, 30f') supported by the by the tower and multiple tracks (30t) supported by said tensioner frame, said tracks being adapted to - in a flexible pipeline laying configuration - engage the flexible pipeline and to support at least part of the weight of a launched pipeline in the firing line;
- one or more vertical trolley rails (11) supported by the pipeline launch tower;
- a trolley (12) which is movable along the vertical trolley rails in a vertical trolley path (P);
- a hoisting device (15) being adapted to lower and raise the trolley;
wherein the lower tensioner (30) comprises two frame segments (30f, 30f') with track units (30t) which are adapted to be conjoined to each other, each one being pivotably mounted to the tower about a respective vertical pivot axis (PA; PA'), and in that the one or more vertical trolley rails (11) are positioned between these vertical pivot axes; the frame segments being movable between a closed flexible pipeline laying configuration in which the frame segments are conjoined to form an enclosed pipeline annulus able to support the pipeline, and an open configuration wherein the segments are disconnected and separated and have pivoted over at least 90° to clear the vertical trolley path.

13. Marine reel lay method pipeline installation system according to claim 12, wherein the pipeline launch tower is square or rectangular in cross-section having a front side (10a) adjoining the vertical trolley path (P) and perpendicular sides (10m, 10n) thereto, wherein preferably the frame segments (30f, 30f') are mounted to the sides (10m, 10n) of the pipeline launch tower, wherein preferably the frame segments in the open configuration have pivoted essentially over 180°, adjoining the sides of the tower.

14. Marine reel lay method pipeline installation system according to one or more of the preceding claims 12-13, wherein a frame segment comprises a control installation (30h, 30h') which is pivotable together with the frame segment (30f, 30f').

15. Method for laying an offshore pipeline wherein use is made of a marine reel lay method pipeline installation system according to one or more of the preceding claims 12-14, preferably comprising the steps of:
- laying a flexible pipeline with the one or more tensioners in the pipeline laying configuration;
- pivoting the tensioner frame segments to the open configuration;
operating the hoisting device to lower and raise the trolley in the unobstructed vertical trolley path.

## Patentansprüche

1. Wasserfahrzeug (1), welches ausgestaltet ist, unterwasserbohrlochbezogene Vorgänge auszuführen, welche eine Modulhandhabung und ein Legen einer flexiblen Pipeline, zum Beispiel einen Bohrlocheingriff, aufweisen, wobei das Wasserfahrzeug umfasst:
- einen Rumpf (2) mit einem Hauptdeck (3);
- einen Moonpool (5) mit einer Moonpoolwand (6), welche sich durch den Rumpf erstreckt;
- einen stationären Bohrmast (10) mit einem geschlossenen Umriss, welcher an dem Rumpf benachbart zu dem Moonpool angebracht ist, wobei der Mast eine vordere Seite (10a) aufweist, welche dem Moonpool gegenüberliegt;
- eine oder mehrere an der vorderen Seite von dem Bohrmast vorgesehene vertikale Wagenschienen (11), welche sich in den Moonpool und entlang einem Mastseiten-Moonpool-Wandteil (6a) erstrecken;
- einen Modulhandhabungswagen (12), welcher während einer Modulhandhabung bewegbar entlang der vertikalen Wagenschienen in einem vertikalen Wagenpfad (P) in den Moonpool beweglich ist;
- eine Hebevorrichtung (15), welche ausgestaltet ist, während einer Modulhandhabung das Modul abzusenken und anzuheben;
- eine Modulhandhabungsvorrichtung (20), welche ausgestaltet ist, während einer Modulhandhabung Module zu dem Modulhandhabungswagen zu übertragen, umfassend Rutschschienen (22) auf dem Hauptdeck, welche sich in Richtung der Moonpoolwand erstrecken, wobei, während einer Modulhandhabung, ein unversperrter Modulhandhabungsbereich (A) über den Rutschschienen und dem Moonpool bereitgestellt wird;
- eine oder mehrere Spannvorrichtungen (30; 31), wobei jede Spannvorrichtung einen Spannrahmen (30f, 30f'; 31f), welcher von dem Bohrmast gehalten wird und mehrere Schienen (30t; 31t), welche von dem Spannrahmen gehalten werden, umfasst, wobei die Schienen ausgeschaltet sind, in einer Pipeline-Legekonfiguration während eines Legens einer flexiblen Pipeline die flexible Pipeline in Eingriff zu bringen und zumindest einen Teil des Gewichts der abgelaufenen Pipeline in einer Schusslinie, welche sich an der Außenseite von und benachbart zu der vorderen Seite des Bohrmastes und durch den Moonpool erstreckt, zu halten;
wobei
zumindest ein Spannrahmen von einer unteren Spannvorrichtung drehbar um eine vertikale Drehachse (PA; PA') an dem Bohrmast befestigt ist, sodass der Spannrahmen zwischen der Pipelinelegekonfiguration, in welcher die untere Spannvorrichtung in dem Modulhandhabungsbereich vorgesehen ist, und einer offenen Konfiguration drehbar ist, in welcher der Modulhandhabungsbereich und zumindest ein Teil von dem vertikalen Wagenpfad unversperrt ist, um eine Modulhandhabung zu ermöglichen.

2. Wasserfahrzeug nach Anspruch 1, wobei zumindest ein horizontaler Hebebalken (35a, 35b) drehbar um eine vertikale Drehachse (PA, PA') an dem Bohrmast (10) unterhalb der einen oder mehreren Spannvorrichtungen (30, 31) drehbar angebracht ist, sodass der Hebebalken zwischen einer Betriebskonfiguration, in welcher sich der horizontale Hebebalken senkrecht zu dem Bohrmast in dem Modulhandhabungsbereich erstreckt, und einer Nichtbetriebskonfiguration, in welcher der Modulhandhabungsbereich unversperrt ist, um eine Modulhandhabung zu ermöglichen, versetzbar ist.

3. Wasserfahrzeug nach Anspruch 1 oder 2, wobei mindestens ein Zentrierer (40; 41; 42) drehbar um eine horizontale Drehachse (40a; 41a; 42a) an der vorderen Seite (10a) des Bohrmasts angebracht ist, sodass der Zentrierer zwischen einer Betriebskonfiguration, in welcher sich der Zentrierer senkrecht zu dem Bohrmast in dem vertikalen Wagenpfad erstreckt, und einer Nichtbetriebskonfiguration, in welcher der Zentrierer in Richtung des Bohrmasts gedreht ist und der vertikale Wagenpfad unversperrt ist, um eine Modulhandhabung zu ermöglichen, versetzbar ist.

4. Wasserfahrzeug nach einem oder mehreren der vorhergehenden Ansprüche, wobei der stationäre Bohrmast eine vordere, eine hintere und zwei Seitenplatten (10k; 10l; 10m; 10n) umfasst, welche durch Eckverbindungen (10s) miteinander verbunden sind, um den geschlossenen Umriss auszubilden, und wobei zwei vertikale Wagenschienen (11a; 11b) an den zwei Eckverbindungen von der vorderen Platte mit den Seitenplatten angebracht sind.

5. Wasserfahrzeug nach einem oder mehreren der vorhergehenden Ansprüche, wobei ein Hilfskran (16) an einer erhöhten Position an dem Bohrmast angebracht ist, vorzugsweise an einem oberen Ende des Bohrmasts.

6. Wasserfahrzeug nach einem oder mehreren der vorhergehenden Ansprüche, ferner umfassend eine eine bogenförmige Führungsfläche (45s) in einer vertikalen Ebene bereitstellende Pipelineführung (45), welche ausgestaltet ist, während eines Legens einer flexiblen Pipeline über eine Führungshaltestruktur (46) über der einen oder den mehreren Spannvorrichtungen angebracht zu werden, um die Pipeline über die Pipelineführung in die eine oder die mehreren Spannvorrichtungen und in die Schusslinie (F) zu führen, wobei vorzugsweise der Bohrmast (10) an einer Backbordseite oder einer Steuerbordseite des Wasserfahrzeugs vorgesehen ist und wobei der Bohrmast abseits von der vertikalen Ebene von der bogenförmig Führungsfläche (45s) vorgesehen ist, und wobei die Führungshaltestruktur (46) als ein einseitiger Führungshaltearm ausgebildet ist, welcher nur an einer Seite von der Pipelineführung angeordnet ist, wobei ein Ende davon an einer Seite (10m) des Bohrmasts senkrecht zu der vorderen Seite (10k) von dem Bohrmast angebracht ist und auf dem anderen Ende von dem Führungshaltearm ein ausladender Träger (46c) vorgesehen ist, um die Pipelineführung (45) zu halten.

7. Wasserfahrzeug nach einem oder mehreren der vorhergehenden Ansprüche, wobei der Spannrahmen eine Steuerinstallation (30h; 30h'; 31h; 31') aufweist, welche zusammen mit dem Spannrahmen drehbar ist.

8. Wasserfahrzeug nach einem oder mehreren der vorhergehenden Ansprüche, wobei der Spannrahmen (30f; 30f'; 31f) an einer Seite (10m; 10n) von dem Bohrmast senkrecht zu der vorderen Seite (10k) angebracht ist, und wobei der Spannrahmen in der offenen Konfiguration im Wesentlichen über 180° gedreht ist, um an eine Seite von dem Mast senkrecht zu der vorderen Seite anzugrenzen.

9. Wasserfahrzeug nach einem oder mehreren der vorhergehenden Ansprüche, wobei die untere Spannvorrichtung (30) zwei Rahmenhälften (30f; 30f') mit Schienen umfasst, welche ausgestaltet sind, zusammen miteinander verbunden zu sein, wobei jede Rahmenhälfte drehbar an dem Bohrmast um eine entsprechende vertikale Drehachse angebracht ist, sodass die Rahmenhälften zwischen der Pipelinelegekonfiguration, in welcher die Rahmenhälften in dem Modulhandhabungsbereich verbunden sind, um einen umschließenden Pipelinering auszubilden, um in der Lage zu sein, die Pipeline zu halten, und der offenen Konfiguration, in welcher die Segmente unverbunden und getrennt sind und sich gedreht haben, um den Modulhandhabungsbereich und zumindest einen Teil von dem vertikalen Wagenpfad freizumachen, beweglich sind.

10. Verfahren zum Ausführen von unterwasserbohrlochbezogenen Vorgängen, welche eine Modulhandhabung und ein Legen einer flexiblen Pipeline, zum Beispiel einen Bohrlocheingriff, aufweisen, wobei ein Wasserfahrzeug nach einem oder mehreren der vorhergehenden Ansprüche verwendet wird, vorzugsweise umfassend die Schritte:
- Legen einer flexiblen Pipeline mit der einen oder den mehreren Spannvorrichtungen in der Pipelinelegekonfiguration;
- Drehen des Spannrahmens einer unteren Spannvorrichtung in die offene Konfiguration;
- Bewegen des Modulhandhabungswagens zu einer Modulaufnahmeposition;
- Übertragen eines Moduls über die Modulhandhabungsvorrichtung zu dem Modulhandhabungswagen in der Modulaufnahmeposition;
- Absenken des Moduls in den Moonpool.

11. Verfahren nach Anspruch 10, umfassend die Schritte:
- Befestigen einer Pipelineführung (45) über eine Führungshaltestruktur (46) über der einen oder den mehreren Spannvorrichtungen, um eine bogenförmige Führungsfläche (45s) in einer vertikalen Ebene bereitzustellen
- Führen eines aufgewickelten Rohrs über die Pipelineführung und durch die eine oder die mehreren Spannvorrichtungen und in die Schusslinie (F).

12. Meerespipelineinstallationssystem für ein Spulenlegeverfahren zum Legen einer flexiblen Pipeline auf den Meeresgrund, wobei das System umfasst:
- einen Pipelineablaufturm (10), welcher ausgestaltet ist, die Pipeline in einer Schusslinie (F) entlang dem Turm ablaufen zu lassen,
- eine an einer erhöhten Position vorgesehene Pipelineführung (45), welche ausgestaltet ist, die Pipeline über die Pipelineführung in die Schusslinie zu führen,
- eine oder mehrere Spannvorrichtungen (30; 31), wobei jede Spannvorrichtung einen Spannrahmen (30f, 30'), welcher von dem Turm gehalten wird, und mehrere Schienen (30t), welche von dem Spannrahmen gehalten werden, umfasst, wobei die Schienen ausgestaltet sind, in einer Legekonfiguration für eine flexible Pipeline die flexible Pipeline in Eingriff zu bringen und zumindest einen Teil des Gewichts der abgelaufenen Pipeline in der Schusslinie zu halten;
- eine oder mehrere vertikale Wagenschienen (11), welche von dem Pipelineablaufturm gehalten werden;
- einen Wagen (12), welcher entlang der vertikalen Wagenschienen in einem vertikalen Wagenpfad (P) beweglich ist;
- eine Hebevorrichtung (15), welche ausgestaltet ist, den Wagen abzusenken und anzuheben;
wobei
die untere Spannvorrichtung (30) zwei Rahmensegmente (30f; 30f') mit Schieneneinheiten (30t) umfasst, welche ausgestaltet sind, miteinander verbunden zu werden, wobei jede einzelne drehbar an dem Turm um eine entsprechende vertikale Drehachse (PA; PA') angebracht ist, und wobei die eine oder mehreren vertikalen Wagenschienen (11) zwischen diesen vertikalen Drehachsen angeordnet sind; wobei die Rahmensegmente zwischen einer geschlossenen Legekonfiguration für eine flexible Pipeline, in welcher die Rahmensegmente verbunden sind, um einen umschließenden Pipelinering auszubilden, welcher in der Lage ist, die Pipeline zu halten, und einer offenen Konfiguration, in welcher die Segmente unverbunden und getrennt sind und sich über zumindest 90° gedreht haben, um den vertikalen Wagenpfad freizugeben, beweglich sind.

13. Meerespipelineinstallationssystem für ein Spulenlegeverfahren nach Anspruch 12, wobei der Pipelineablaufturm im Querschnitt quadratisch oder rechteckig ist mit einer vorderen Seite (10a), welche an den vertikalen Wagenpfad (P) angrenzt, und senkrechte Seiten (10m, 10n) dazu aufweist, wobei vorzugsweise die Rahmensegmente (30f; 30f') an den Seiten (10m, 10n) von dem Pipelineablaufturm angebracht sind, wobei sich vorzugsweise die Rahmensegmente in der offenen Konfiguration im Wesentlichen über 180° angrenzend an die Seiten des Turms angrenzen gedreht haben.

14. Meerespipelineinstallationssystem für ein Spulenlegeverfahren nach einem oder mehreren der vorhergehenden Ansprüche 12 bis 13, wobei ein Rahmensegment eine Steuerinstallation (30h, 30h') umfasst, welche zusammen mit dem Rahmensegment (30f, 30f') drehbar ist.

15. Verfahren zum Legen einer Pipeline auf offener See, wobei ein Meerespipelineinstallationssystem für ein Spulenlegeverfahren nach einem oder mehreren der vorhergehenden Ansprüche 12 bis 14 verwendet wird, vorzugsweise umfassend die Schritte:
- Legen einer flexiblen Pipeline mit der einen oder den mehreren Spannvorrichtungen in der Pipelinelegekonfiguration;
- Drehen der Spannrahmensegmente in die offene Konfiguration;
Betreiben der Hebevorrichtung, um den Wagen in dem unversperrten vertikalen Wagenpfad abzusenken und anzuheben.

## Revendications

1. Navire (1) adapté pour réaliser des opérations liées au puits de forage sous-marin comprenant la manipulation de module et la pose de conduite souple, par exemple l'intervention sur un puits de forage, ledit navire comprenant :
une coque (2) ayant un pont principal (3) ;
un puits central (5) ayant une paroi de puits central (6) s'étendant à travers la coque ;
un mât de forage fixe (10) ayant un contour fermé monté sur la coque adjacente audit puits central, dans lequel le mât a un côté avant (10a) faisant face au puits central ;
un ou plusieurs rails de chariot verticaux (11) prévus au niveau du côté avant du mât de forage, s'étendant dans le puits central et le long d'une partie de paroi de puits central latérale de mât (6a) ;
un chariot de manipulation de module (12) qui est - pendant la manipulation de module - mobile le long des rails de chariot verticaux dans une trajectoire de chariot verticale (P) dans le puits central ;
un dispositif de levage (15) étant adapté - pendant la manipulation de chariot - pour abaisser et lever le module ;
un dispositif de manipulation de module (20) adapté pour - pendant la manipulation de chariot - transférer des modules au chariot de manipulation de module, comprenant des rails de patin (22) sur le pont principal s'étendant vers la paroi de puits central, dans lequel - pendant la manipulation de module - une zone de manipulation de module non obstruée (A) est prévue au-dessus des rails de patin et du puits central ;
un ou plusieurs tendeurs (30 ; 31), chaque tendeur comprenant un bâti de tendeur (30f, 30f' ; 31f) supporté par le mât de forage et plusieurs chemins de roulement (30t ; 31t) supportés par ledit bâti de tendeur, lesdits chemins de roulement étant adaptés pour - dans une configuration de pose de conduite pendant la pose de la conduite souple - mettre en prise la conduite souple et pour supporter au moins une partie du poids d'une conduite lancée dans une ligne de tir qui s'étend à l'extérieur de et de manière adjacente au côté avant du mât de forage et à travers le puits central ;
dans lequel au moins le bâti de tendeur d'un tendeur inférieur est monté de manière pivotante autour d'un axe de pivot vertical (PA ; PA') sur le mât de forage, de sorte que le bâti de tendeur peut pivoter entre la configuration de pose de conduite dans laquelle le tendeur inférieur est prévu dans la zone de manipulation de module et une configuration ouverte dans laquelle la zone de manipulation de module et au moins une partie de la trajectoire de chariot verticale n'est pas obstruée pour permettre la manipulation de module.

2. Navire selon la revendication 1, dans lequel au moins une poutre de levage horizontale (35a, 35b) est montée de manière pivotante au-dessus d'un axe de pivot vertical (PA, PA') sur le mât de forage (10), au-dessous des un ou plusieurs tendeurs (30, 31), de sorte que la poutre de levage est déplaçable entre une configuration opérationnelle dans laquelle la poutre de levage horizontale s'étend perpendiculairement au mât de forage, dans la zone de manipulation de module, et une configuration non opérationnelle dans laquelle la zone de manipulation de module n'est pas obstruée pour permettre la manipulation de module.

3. Navire selon la revendication 1 ou 2, dans lequel au moins un centreur (40 ; 41 ; 42) est monté de manière pivotante autour d'un axe de pivot horizontal (40a ; 41a ; 42a) sur le côté avant (10a) du mât de forage, de sorte que le centreur est déplaçable entre une configuration opérationnelle dans laquelle le centreur s'étend perpendiculairement au mât de forage, dans la trajectoire de chariot verticale, et une configuration non opérationnelle dans laquelle le centreur a pivoté vers le mât de forage et la trajectoire de chariot verticale n'est pas obstruée pour permettre la manipulation de module.

4. Navire selon une ou plusieurs des revendications précédentes, dans lequel le mât de forage fixe comprend des plaques avant et arrière et deux latérales (10k ; 10l ; 10m ; 10n) interconnectées par des raccordements de coin (10s) pour former le contour fermé et dans lequel deux rails de chariot verticaux (11a ; 11b) sont montés sur les deux raccordements de coin de la plaque avant avec les plaques latérales.

5. Navire selon une ou plusieurs des revendications précédentes, dans lequel une grue auxiliaire (16) est montée dans une position élevée sur le mât de forage, de préférence sur une extrémité supérieure du mât de forage.

6. Navire selon une ou plusieurs des revendications précédentes, comprenant en outre un guide de conduite (45) fournissant une surface de guidage arquée (45s) dans un plan vertical adapté pour - pendant la pose de la conduite souple - être monté via une structure de support de guide (46) au-dessus des un ou plusieurs tendeurs pour guider ladite conduite sur le guide de conduite dans les un ou plusieurs tendeurs et dans la ligne de tir (F), dans lequel de préférence le mât de forage (10) est prévu au niveau d'un côté à bâbord ou un côté à tribord du navire et dans lequel le mât de forage est prévu à côté du plan vertical de la surface de guidage arquée (45s), et dans lequel la structure de support de guidage (46) est mise en oeuvre sous la forme d'un bras de support à un seul côté agencé sur un côté du guide de conduite uniquement, dont une extrémité est montée sur un côté (10m) du mât de forage, perpendiculaire au côté avant (10k) du mât de forage, et sur l'autre extrémité duquel bras de support de guidage, un support en porte-à-faux (46c) est prévu pour guider le guide de conduite (45).

7. Navire selon une ou plusieurs des revendications précédentes, dans lequel le bâti de tendeur comprend une installation de commande (30h ; 30h' ; 31h ; 31h') qui peut pivoter conjointement avec le bâti de tendeur.

8. Navire selon une ou plusieurs des revendications précédentes, dans lequel le bâti de tendeur (30f ; 30f' ; 31f) est monté sur un côté (10m ; 10n) du mât de forage, perpendiculaire au côté avant (10k) et dans lequel le bâti de tendeur dans la configuration ouverte a pivoté essentiellement à 180° pour être contigu à un côté du mât, perpendiculaire au côté avant.

9. Navire selon une ou plusieurs des revendications précédentes, dans lequel le tendeur inférieur (30) comprend deux moitiés de bâti (30f, 30f') avec des chemins de roulement qui sont adaptées pour être liées entre elles, chaque moitié de bâti étant montée de manière pivotante sur le mât de forage autour d'un axe de pivot vertical respectif, de sorte que les moitiés de bâti sont mobiles entre la configuration de pose de conduite dans laquelle les moitiés de bâti sont liées dans la zone de manipulation de module pour former un anneau de conduite enfermé pouvant supporter la conduite, et la configuration ouverte dans laquelle les segments sont déconnectés et séparés et ont pivoté pour dégager la zone de manipulation de module et au moins une partie de la trajectoire de chariot verticale.

10. Procédé pour réaliser des opérations liées au puits de forage sous-marin comprenant la manipulation de module et la pose de conduite souple, par exemple l'intervention sur un puits de forage, dans lequel on utilise un navire selon une ou plusieurs des revendications précédentes, comprenant de préférence les étapes consistant à :
- poser la conduite souple avec les un ou plusieurs tendeurs dans la configuration de pose de conduite ;
- pivoter le bâti de tendeur d'un tendeur inférieur dans la configuration ouverte ;
- déplacer le chariot de manipulation de module dans une position de réception de module ;
- transférer un module via le dispositif de manipulation de module au chariot de manipulation de module dans la position de réception de module ;
- abaisser le module dans le puits central.

11. Procédé selon la revendication 10, comprenant les étapes consistant à :
- monter un guide de conduite (45) via une structure de support de guidage (46) au-dessus des un ou plusieurs tendeurs pour fournir une surface de guidage arquée (45s) dans un plan vertical,
- étendre un tubage hélicoïdal sur le guide de conduite et à travers les un ou plusieurs tendeurs et dans la ligne de tir (F).

12. Système d'installation de conduite pour procédé de pose de bobine marine pour poser une conduite souple sur le lit marin, dans lequel le système comprend :
- une tour de lancement de conduite (10) qui est adaptée pour lancer la conduite dans une ligne de tir (F) le long de ladite tour,
- un guide de conduite (45) prévu dans une position élevée, qui est adapté pour guider ladite conduite sur le guide de conduite dans la ligne de tir,
- un ou plusieurs tendeurs (30 ; 31), chaque tendeur comprenant un bâti de tendeur (30f, 30f') supporté par la tour et les multiples chemins de roulement (30t) supportés par ledit bâti de tendeur, lesdits chemins de roulement étant adaptés - dans une configuration de pose de conduite souple - pour mettre en prise la conduite souple et pour supporter au moins une partie du poids de la conduite lancée dans la ligne de tir ;
- un ou plusieurs rails de chariot verticaux (11) supportés par la tour de lancement de conduite ;
- un chariot (12) qui est mobile le long des rails de chariot verticaux dans une trajectoire de chariot verticale (P) ;
- un dispositif de levage (15) étant adapté pour abaisser et lever le chariot ; dans lequel :
le tendeur inférieur (30) comprend deux segments de bâti (30f, 30f') avec des unités de chemin de roulement (30t) qui sont adaptées pour être liées entre elles, chacune étant montée de manière pivotante sur la tour autour d'un axe de pivot vertical (PA ; PA') respectif et en ce que les un ou plusieurs rails de chariot verticaux (11) sont positionnés entre ces axes de pivot verticaux ; les segments de bâti étant mobiles entre une configuration de pose de conduite souple fermée dans laquelle les segments de bâti sont liés afin de former un anneau de conduite fermé pouvant supporter la conduite, et une configuration ouverte dans laquelle les segments sont déconnectés et séparés et ont pivoté sur au moins 90° pour dégager la trajectoire de chariot vertical.

13. Système d'installation de conduite pour procédé de pose de bobine marine selon la revendication 12, dans lequel la tour de lancement de conduite a une section transversale carrée ou rectangulaire ayant un côté avant (10a) contigu à la trajectoire de chariot verticale (P) et des côtés perpendiculaires (10m, 10n) à cette dernière, dans lequel de préférence les segments de bâti (30f, 30f') sont montés sur les côtés (10m, 10n) de la tour de lancement de conduite, dans lequel de préférence les segments de bâti dans la configuration ouverte ont pivoté essentiellement sur 180°, contigus aux côtés de la tour.

14. Système d'installation de conduite pour procédé de pose de bobine marine selon une ou plusieurs des revendications 12 à 13, dans lequel un segment de bâti comprend une installation de contrôle (30h, 30h') qui peut pivoter conjointement avec le segment de bâti (30f, 30f').

15. Procédé pour poser une conduite en mer dans lequel on utilise un système d'installation de conduite pour un procédé de pose de bobine marine selon une ou plusieurs des revendications 12 à 14, comprenant de préférence les étapes consistant à :
- poser une conduite souple avec les un ou plusieurs tendeurs dans la configuration de pose de conduite ;
- pivoter les segments de bâti de tendeur dans la configuration ouverte ;
actionner le dispositif de levage pour abaisser et lever le chariot dans la trajectoire de chariot verticale non obstruée.
